Europäisches Patentamt

European Patent Office

Office européen des brevets

(19)

(11) Numéro de publication: **0 375 587**
**A2**

(12)

# DEMANDE DE BREVET EUROPEEN

(21) Numéro de dépôt: 89600018.9

(51) Int. Cl.⁵: **B01D 1/28, C02F 1/04**

(22) Date de dépôt: 22.09.89

Le titre de l'invention a été modifié (Directives relatives à l'examen pratiqué à l'OEB, A-III, 7.3)

(30) Priorité: 23.09.88 GR 88010629

(43) Date de publication de la demande: 27.06.90 Bulletin 90/26

(84) Etats contractants désignés:
AT BE CH DE ES FR GB GR IT LI LU SE

(71) Demandeur: Babaloukas, Ioannis
Lokrou 10
GR-35200 Atalanti(GR)

(72) Inventeur: Babaloukas, Ioannis
Lokrou 10
GR-35200 Atalanti(GR)

(54) Méthode et appareil de distillation cyclique.

(57) L'appareil comporte deux voisinants élements verticaux ,un troisième récipient long et étroit,la style hydrostatique qui comprend un ascenseur mécanique pour l'extraction des sels.

Les extrémités basses des trois récipients communiquent et l'aérisation est effectuée au troisième récipient latéral comportant trois alternateurs de chaleur en série,chaudière-condensateur-refrigérateur (6,7,9) pour la condensation des vapeurs.

Les caractéristiques principales de l'invention sont basées sur la fait qu'elle exploite presque de manière integrale la chaleur latente de l'aérisation,elle exploite la propriété du Nacl à grande concentration qui empêche les incrustations du sel et l'érosion ,elle supprime par automatique aérisation thermique les microorganismes à température élevée et l'influence de l'eau salée.

EP 0 375 587 A2

## METHODE ET APPAREIL DE DISTILLATION CYCLIQUE

L'invention se rapporte à une méthode de distillation effectuée par la recompression des vapeurs réalisée dans un appareil spécial et suivant une procédure précise.Nous exploitons presque toute la chaleur d'aérisation et nous affrontons efficacement l'incrustation des sels,l'érosion et les microorganismes.
Le dessin 1 présente un tel appareil.

La distillation par recompression mécanique est connue;nous l'utilisons pour la condesation des solutions nucléaires peu dense et la distillation de l'eau,mais sans possibilité d'extraction des sels à la distillation des solutions salines et en outre,nous ne pouvons pas affronter l'incrustation des sels,l'érosion,les microorganismes et l'augmentation du point d'ébulition des solutions.
Un tel appareil est annéxé en photocopie d'une bibliographie analogue.

L'appareil du dessin 1 comporte deux récipients voisins et verticaux (pricipal et latéral),dont les extrémités se trouvent sur un différent plan horizontal,ainsi que par un tierce récipient long et étroit (colonne hydraustatique) comprénant un ascenseur mécanique pour l'extraction des sels ,en cas de distillation des solutions salines.Les trois récipients susmentionnés communiquent avec leurs extrémités basses,alors que l'extrémité supérieure du récipient latéral communique avec le récipient principal et aboutissent à une cônique partie incliné qui constitue l'extrémité de l'appareil.

L'aérisation est effectuée au récipient principal;les vapeurs sont cpomprimées par le compresseur 14 au condessateur 8 se trouvant dans le récipient latéral où elles se liquidifie ,alors que la chaleur latente de condensation passe et chauffe les molecules du liquide se trouvant au milieu ambiant du condesateur 8.Au récipient latéral existent trois alténateurs de chaleur,disposés en série ,tels que la chaudière ,le condensateur et le réfrigérateur (6,8,10).

L'avantage de cette invention est que pour la première fois nous effectuons la distillation de l'eau de la mer avec des produits tels que eau et sels;jusqu'à présente on pratiquait seulement la vaporisation de l'eau de la mer;L'invention peut encore être applique à la distillation ,la condensation des solutions.à coût bas.Nous décrirons la distillation de l'eau de la mer ,qui présente le plus grand intéret et les plus grandes difficultés.


## APPLICATION A LA DISTILLATION DE L'EAU DE LA MER

Nous allons essayer de décrire la procédure de distillation à l'appareil spécial et expliquer de quelle manière nous affrontons l'érosion ,l'incrustation des sels , les microorganismes etc.
Nous démontrons expérimentalement que le Nacl à grande concentration empêche les incrustations des sels.Prenons deux verres d'ébulition de 2 litres et remplissons-les avec de l'eau de mer.
Dans un verre nous ajoutons des sels que nous avons récu par une vaporisation précédemment effectuée de l'eau de la mer et au point à ce que la concentration totale des sels puisse atteindre le 30%
Nous entamnons la vaporisation des contenus des verres que nous remplissons avec de l'eau froide de la mer,chaque fois qu'une dimunition du vollume de leur contenu soit constatée.
Nous continuons la procédure de vaporisation jusqu'à l'apparition de sédiment de sels au verre de la concentration initiale des sels;nous arrèttons le chauffemnt et les verres étant réfroidis,nous versons leur contenu et nous les rinçons avec de l'eau de ville.
Nous constatons que le verre de la concentration initiale des sels est clair,sans incrustations des sels,alors que le verre contenant l'eau naturelle de la mer présente des incrustations des sels ,tant aux parois qu'au fond.
Nous obtiendrons le même résultat ,si nous repétions l'expérience en vaporisant à sec le contenu des verres initiales.

Le Nacl empêche les incrustations des sels non seulement à des grandes concentrations,comme c'est notre cas,mais à des petites aussi.
La légère incustation de sels sur les altérnateurs ne pose pas de problèmes car,ils se trouvent pas au récipient principal de précipitation et d'autre part sont d'une forme spéciale 2,3,4 et ils sont nettoyés par des brosses spéciales.Ils ont la forme d'un paralélépipéde rectangulaire à cloisons intérieurs;leur épaisseur est beaucoup plus petite de celle des deux autres et leur surfaces extérieures sont plates.Des doubles brosses à lames touchent les surfaces de chaque alternateur et mues de manière horizontale et altérnative procède à l'enlevement des incrustations des sels.


EROSION-AERISATION THERMIQUE

Selon la bibliographie,l'oxygène dilué est corrosif et seulement quand il est complètement dilué ,pendant le chauffement de l'eau,aux 100°C,alors que la corosion,provoquée par la concentration des ions de cl,au dessus de 3%,est minime. La distillation cyclique de l'eau de la mer est effectué sous des telles conditions ,et en ajoutant en plus de l'eau salée et ainsi l'oxygène et les gaz corosifs se dilue par le chauffement et se dirigent vericalement vers la partie supérieure et cônique du récipient latéral et sortent automatiquement par la sortie 5.

## MICROORGANISMES

Selon la bibliographie,les microorganismes,à la température audessus de 100°C ne provoquent pas des problèmes de corrosion et d'obstructions.Notre expérience présente ces caractéristiques et en raison du rajout de l'eau salée ce genre de problèmes ne se présentent ,même pas aux basses températures.

## DIMUNITION DU POINT D'EBULITION

Le point d'ébulition de l'eau salée,saturée qu'est l'eau de la mer, est 108,8°C;à cette température ,le compresseur 14 ne peut pas fonctionner comme étant d'un étage; c'est pour cela que par une pompe à vide ,nous appliquons du vide 25% à l'endroit de l'aérisation et nous faisons dimuinuer le point d'ébulition aux 100°C,environ .

## DESCRIPTION

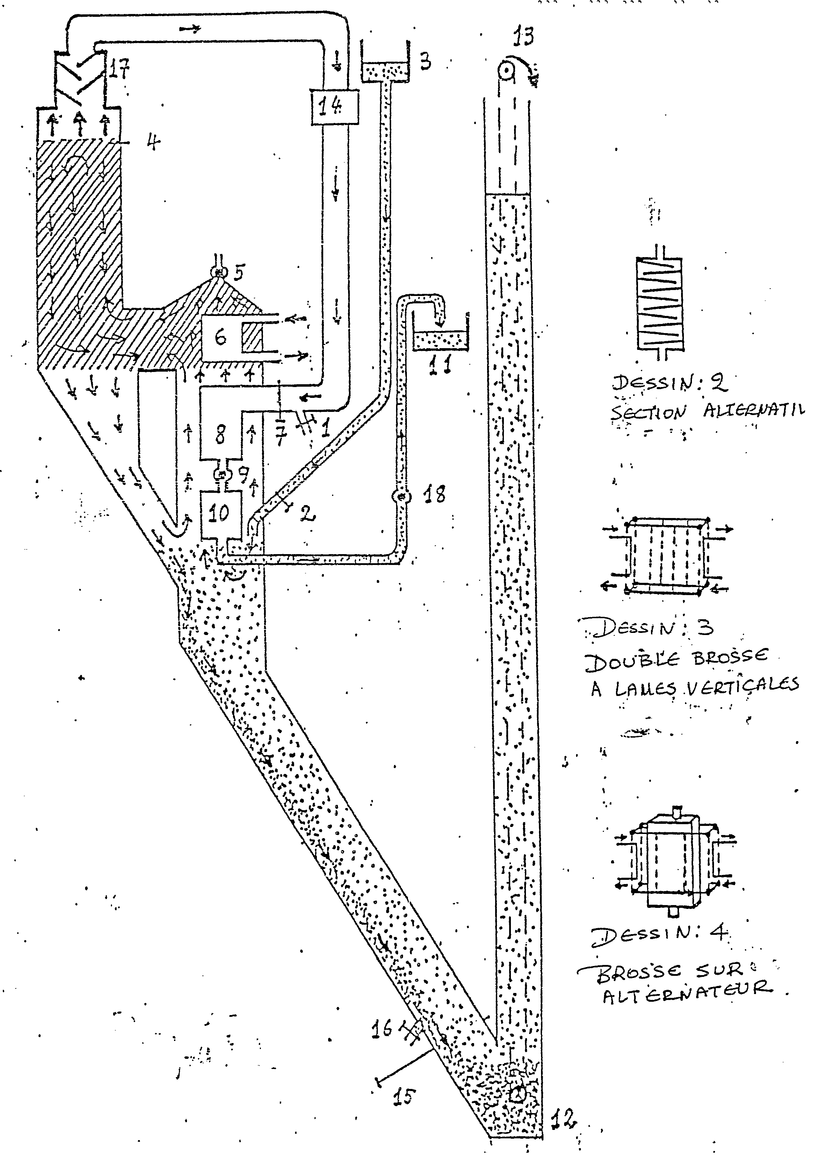

Selon le dessin 1 ,nous ouvrons les interrupteurs 1 et 2 et nous remplissons,en une seule fois ,les recipients de l'appareil avec de l'eau de la mer de concentration élevée en sels,solution saturée à laquelle on rajoute du Nacl jusqu'à un niveau controlé 4;l'eau de la mer provient du reservoir de l'appareil 3.

La sortie de la place 5,en raison de la portance du flotteur, ferme automatiquement et nous commençons le chauffement de l'eau salée à la chaudière 6 se trouvant au dessus de deux recipients (partie hachurée)- ,jusqu'au point d'ébulition de l'eau salée et en seule fois.

En raison de la petite conductivité de l'eau salée ,l'écoulement de la chaleur vers le bas se ralentit;ën ce stade,nous pourrions supposer que les molecules de l'eau salée audessous de la partie hachurée sont presque stagnantes,autrement dit,leur mouvement cyclique qui commencera après la formation de la première condensation au condensateur 8 et dirigé vers la droite n'a pas encore commencé.Le chauffement ,donc,de la partie hachurée de l'eau salée est possible et est effectuée par le transfert de la chaleur produite seulement par le mouvement des molécules de l'eau salée de la susdite partie.Durant le chauffement initial et après la sortie de l'air des endroits vides et des tuyaux par la sortie 1,nous fermons la susdite sortie et nous ouvrons l'éntrée 7 qui laisse la vapeur entrer dans le condensateur 8;ainsi nous procédons à la condensation avec la recompression des vapeurs. A ce point,pour diminuer le point d'ébulition (100° environ)nous créons un vide 25% à l'endroit d'aérisation du récipient principal au moyen du système de pompage -compresseur 14.Si nous pourrions fabriquer un compresseur à un étage ët fonctionnant à une température supérieure des 105°C;à titre d'exemple,jusqu'aux 113°C,sans problèmes de librification et des métaux:ainsi,compte tenu du fait que l'air a déjà été chassé et la condensation est facilitée , il pourrait avoir une condensation sans l'éxistence d'un vide précédent pour la diminution du point d'ébulition du point d'ébulition.

Les difficultés susmemtionnés vues,nous faisons diminuer d'abord le point d'ébullition aux 100° et nous compressons les vapeurs au condensateur 8,jusqu'aux 105°C et à la pression absolue 1,23 atm;la liquidification est faite parce que l'ambiance du condensateur 8 est plus froide.

Le flotteur de la place 9 crée la résistance de compression des vapeurs et dès la première condensation formée au condensateur par la portance du flotteur 9,cette condesation de l'eau distillée passe au refrigérateur 10,se refroidit et se met en reserve au reservoir 11,sous la température ambiante. La densité de la matière des flotteurs 5 et 9 est inférieure de l'eau (moins de 1) pour qu'ils puissent flotter,alors que la matière du flotteur 18 doit avoir une densité supérieure à celle de l'eau pour empêcher les retours de la condensation au condensateur 8 par les arrêts de la distillation ;à ces points on peut utiliser les automatismes qu'on trouve au commerce.Après la distillation d'une quantité d'eau et pour ne pas troubler le niveau de l'eau salée,nous laissons entrer de nouveau de l'eau de la mer et pas de l'eau salée que nous avons initialement utilisé pour le remplissage de l'appareil;Une fois que la distillation continue, l'eau salée atteindra exactement le point de saturation et la precipitation des sels (surtout du Nacl) commencera au récipient de l'aérisation ; les sels concentrés ,en raison de la pésanteur,à la partie inférieure de l'appareil 12 ils sortirons de manière mécanique de la place 13 et en température ambiante par l'ascenseur.La chaudière 6 ne fonctionne plus et le chauffage des molécules de l'eau salée se trouvant au dessous de la partie hachurée de l'appareil,est effectué par la chaleur de condensation latente.

L'eau salée,se trouvant au dessous du réfigérateur 10 de l'appareil et à l'ascenseur ,ainsi que l'eau de la mer et l'eau distillée d'approvisionnement et de reserve (partie pointillée),se trouvent en température ambiante.

Il faut noter que les vapeurs de l'aérisation passent tout d'abord par les pièges de vapeur 17 et se séchent;à la suite,pour la condensation ,elles sont compressées par le compresseur 14 dans le condensateur.

L'eau salée de l'appareil reste toujours saturée parce que il y aura toujours des sels solides au fond de l'appareil ,au dessous de l'ascenseur.

L'oxygène dilué et les autres gaz érosifs dilués dans l'eau salée se dilluent complétement et se dirigent verticalement au récipient des altérnateurs 6,8,10 et se versent automatiquement à l'environnement de 1.......ieure extrémité cônique du recipient ,par la sortie 5.Nous constatons la chute et la montée du floteur de la place 5 produites par la portance; la pressicn à ce point est supérieure de la pression atmosphérique en raison du fait que ce point se trouve à une certaine profondeur de la surface d'aèrisation du récipient principal; en somme,il est d'une certaine statique hauteur manométrique.Selon le dessin 1,en cas où nous avons à faire avec de la distillation et la séparation d'un liquide de son dialyte liquide (ex.séparer l'héxane de son amalgame avec de l'huile de noyaux ou de graines),nous faisons isoler,au moyen de l'intérrupteur 15, la collonne hydraustatique de l'ascenseur et ainsi nous recevons à la sortie 16 le plus lourd dialyte que sont les huiles.

Selon le UNIT OPERATIONS OF CHEMICAL ENGINEERING des MCCABE -SMITH ,1971,nous aperçevons que pour la condensation des dilutions nucléaires peu denses ,au moyen de la recompression mécanique ,la meilleure différence de température de condensation est 5°C.

BALANCE APPROXIMATIVE D'ENERGIE pour la condensation de 1000kg de vapeur et la production de 1m$^3$d'eau diluée:

a. energie de recompression de la vapeur;

nous appellons situation 1 la situation selon laquelle l'eau salée saturée à vide ,c'est à dire à 100°C et sous pression 0,75 ATM et situation 2 celle de la liquidification des vapeurs dans le condensateur 8,c'est à dire à 105°C et 1,23 ATM. La vapeur de la situation 1 est surchauffée (8,8°C),il suit les lois des gaz ;ainsi compressée adiabatiquement atteindra la situation 2,passant auparavant ,tout d'abord de la situation de saturation de l'eau propre (100$^{0C}$ et pression 1 ATM).

$$\text{①} \; 100°C \xrightarrow[\text{Pcat. isotherme}]{\text{comp. adiabatique}} 100°C \xrightarrow[\text{1,23 ATM}]{\text{comp. adiabatique}} 100°C \; \text{②}$$
$$\quad\quad\quad\quad\quad\quad\quad\quad\quad\quad\quad 1 \text{ ATM}$$

Les enthalpies des situations 1 et 2 sont retrospectivement:

$H^{Y1} = 640,0$ et $H^{Y2} = 640, 7$KCAL/KGR .Nous aurons $W = C^V,B\Delta T.J =$ difference des enthalpies $= H^{Y2}-H^{Y1} = 640,7-6.40,0 = 0,7$ KCAL/KGR ou 700 KCAL/1000 KGR de vapeur ou par 1M$^3$d'eau distillée. C'est à dire pour la production de 1$^{m3}$d'eau distillée nous allons consommer 700 KCAL qui correspond au travail thermique de compression pour la liquidification des vapeurs;

b. Energie altérnative:

L'eau distillée et les sels sortants se refroidissent en température ambiante,en echangeant leur température avec des quantités égales d'eau et des sels de l'approvisionnement précédent.

c. Energie restante à l'appareil:

- energie de recompression des vapeurs = 1000.0,7 = 700 KCAL/M$^3$d'eau distillée;

4

- energie de precipitation du Nacl = 30.20 = 600 KCAL/1 M$^3$d'eau distillée.

A l'appareil de distillation de l'eau salée ,exception faite aux températures susméntionnées,nous avons l'addition ou la soustraction d'autres quantités de chaleurs provenues d'autres phénomènes physiques ou chimiques qui se présentent à la distillation tels que dilutions,électrolyses,ionisations etc;pour continuer la distillation ,nous devons ,de manières adéquates,de conserver en équilibre toutes les chaleurs ,à l'appareil de distillation.

Un mode est la double destination de la chaudière 6,qui sert à chauffer ou à refroidir.

Plus précisement ,à la première phase, la chaudière 6 chauffe l'eau salée du sommet des recipients jusqu'au point de son ébulition (partie hachurée)et à la deuxième phase conserve en équilibre la chaleur ,pendant la procédure de la distillation ,par addition ou diminution de la chaleur,en procurant soit de distillée eau froide,d'en bas vers le haut,soit de distillée eau surchauffée,de haut vers le bas.

Il est sous-entendu que la chaudière 6 est raccordée à un extérieur circuit d'eau distillée froide ou surchauffée,qui rejette ou reçoit la chaleur d'une source extérieure. L'avantage de la distillation de l'eau de la mer consiste au fait que la chaleur de l'appareil est en surplus et étant de température de 100° C, elle peut être exploitée et ainsi faire augmenter l'intérêt économique de la méthode de distillation.

En général, nous pouvons dire qu'il s'agit seulement de la distillation de la mer et pas des substances quise trouvent en elle et dont le point d'ébulition et la densité sont plus grandes que celles de l'eau; ainsi, au fur et à mesure que leur concentration dans l eau salée augmentera de sorte qu'elle puisse comporter une source de préparation et augmenter le profit économique de la méthode. L'eau distillée que nous obtenons après la distillation est buvable et de bon goût. Si nous utilisierons beaucpup d'apparreils le profit économique ne sera pas augmenté alors que le potentiel sera miltiplié. Si nous exploitions la propriété que le Nacl présente, c'est à dire la non-incrustation des sels, ainsi que l'aérisation thérique que l'appareil nous permet à obtenir, dans ce cas, nous pouvons distiller ou condenser des déchets liquides en ajoutant du Nacl et en pursuivant une certaine procédure de distillation, selon la nature des déchets.

## Revendications

1. L'invention concerne une méthode améliorée de distillation à recompression mécanique des vapeurs réalisée au moyen d'un appareil spécial et suivant une certaine procédure qui empêche l'incrustation des sels, l'érosion et la formation des microorganismes.

2. L'appareil de distillation,dessin 1,selon la revendication 1 comporte deux voisinants récipients verticaux ,principal et latéral,dont les extrémités supérieures se trouvent à un différent niveau horizontal ainsi que par un troisième récipient vertical, long et étroit (colonne hydraustatique qui comprend un ascenseur mécanique pour la suppression des selss.Les trois recipients susmentionés communiquent à leur basent et aboutissent à une partie cônique qui comprend l'extrémité inférieure de l'appareil .L'aérisation se fait au principal récipient alors qu'au recipient latéral il y a trois altérnateurs de chaleur,en série ,tels que la chaudière ,le condensateur et le refrigérateur (6,8,10)d'une forme spéciale et avec des brosses spéciales servant à gratter les surfaces des altéranateurs 2,3,4,.A l'appareil il y a des automatismes de contrôl du niveau du fluide 4,d'aérisation5 et de formation de résistence 9 pour la condensation.Le pompage et la compression des vapeurs se fait au moyen d'un tuyau du sommet de l'appareil qui est raccordé avec un système de pompe à vide,d'un compresseur 14 et il aboutit à un condensateur 8.

Les reservoirs d'approvisionnement 3 et de reserve 11 de l'eau distillée se trouvent à côté et à la partie supérieure de l'appareil.

3. La procédure de distillation ,selon la revendication 1,est caractérisée par le fait que l'appareil chauffe le fluide du sommet des récipients en une fois,jusqu'au point d'ébulition ,il utilise le Nacl contre les incrustations des sels ,il il effectue,avant la distillation,l'aérisation thérmique ,il chauffe ,condense et réfroidit avec les altéranteurs qui se touvent dans le fluide destiné à la distillation;il effectue l'aérisation des endroits qui n'ont pas d'alternateurs de chaleur et les sels tombent à un niveau vertical sans passer par les alternateurs et les polluer et ils sortent de l'appareil pendant tout le fonctionnement de la distillation.

4.Les alternateurs de l'appareil,selon la revendication 1,2 est en forme parallélépipéde,rectangulaire rectangulaire à diaphragmes intérieurs et ils sont nettoyés avec des doubles brosses qui comprennent des lames verticales pour gratter les surfaces et qui sont en contact avec les surfaces des alternateurs et ils se meuvent de manière horizontale et alternative sur les conducteurs (dessin 2,3,4).

5. Le double rôle de la chaudière 6,selon les revendications 2,3,4 est à chauffer ou refroidir, et qui est raccordée avec un circuit extérieur de reception ou de rejet de la chaleur d'une source extérieure.

6. Pour la reduction de l'hauter de la partie supérieure de l'appareil ,selon les revendications 1,2 et en cas de nécessité, ,nous pouvons adapter à la place d'aérisation 5 du récipient latéral une pompe à vide.

5

7. Nous pouvons supprimer la pompe à vide de la place 14 ,pour autant que le point d'ébulition des solutions diluées est inférieurs des l00 °C.

8. Nous pouvons,selon la revendication 2 et en cas de necéssité, unir le récipient latéral tout au long de son côté avec le récipient principal,pour certaines distillations.

9. Rajout de Nacl,selon les revendications 2 ,à des solutions fluides (déchets polluants ou non) contre l'incrustation des sels et distillation et condensation de ceux-ci ,suivant une procédure selon leur nature.

10. Isolation de la collone hydraustatique et de l'ascenseur avec l'interrupteur 15 ,en cas de distillation et de condensation des solutions non-salines et reception de leur composants,les plus lourds,de la sortie 16.

DESSIN: 2
SECTION ALTERNATIL

DESSIN: 3
DOUBLE BROSSE
A LAMES VERTICALES

DESSIN: 4
BROSSE SUR
ALTERNATEUR.